# EUROPÄISCHE PATENTSCHRIFT

(11) **EP 1 960 155 B1**
(45) Veröffentlichungstag und Bekanntmachung des Hinweises auf die Patenterteilung: **14.07.2010**
(21) Anmeldenummer: 06818662.6
(22) Anmeldetag: 16.11.2006
(51) Int. Cl.: B23Q 7/04, B23B 13/00

(54) **WERKZEUGMASCHINE**
MACHINE TOOL
MACHINE-OUTIL

(30) Priorität: 22.11.2005 DE 102005055972
(43) Veröffentlichungstag der Anmeldung: 27.08.2008
(73) Patentinhaber: Conen, Werner, 40764 Langenfeld (DE)
(72) Erfinder: Conen, Werner, 40764 Langenfeld (DE)
(74) Vertreter: Hofstetter, Alfons J.
(86) Internationale Anmeldenummer: PCT/EP2006/011095
(87) Internationale Veröffentlichungsnummer: WO 2007/059907

(56) Entgegenhaltungen:
- DE-A1- 3 133 755
- DE-A1- 3 329 266
- DE-A1- 3 420 531
- DE-A1- 10 140 940
- DE-A1-102004 037 879
- DE-B3-102004 028 206
- US-A- 5 309 368
- US-A1- 2002 050 194

## Beschreibung

Die Erfindung betrifft eine CNC-gesteuerte Werkzeugmaschine, insbesondere eine CNC-gesteuerte Drehmaschine mit den Merkmalen gemäß dem Oberbegriff des unabhängigen Patentansprüchs 1.

### Stand der Technik

Eine derartige CNC-gesteuerte Werkzeugmaschine ist in der DE 34 20 531 A1 beschrieben. Im Allgemeinen werden heute zum Be- und Entladen von Werkzeugmaschinen, insbesondere auch von Drehmaschinen, neben aufwendigen Portalladern oder Robotern auch Stangenvorschübe mit Teilefängern eingesetzt. Der Portallader oder Roboter muss bei jeder Werkstückänderung neu justiert werden. Der Stangenvorschub ist durch den Durchlass (Bohrung) und der Spindel begrenzt, und der Abtransport der Fertigteile erfolgt meist über Teilefänger, welcher bei oberflächensensiblen Werkstücken nicht eingesetzt werden kann.

Aus der DE 33 29 266 A1 ist eine CNC-gesteuerte Werkzeugmaschine, insbesondere Drehmaschine mit horizontal arbeitender Hauptspindel bekannt, bei der ein linear verfahrbarer Greifer Werkstücke von einer Fördereinrichtung aufnimmt und diese in den Bearbeitungsbereich und vom Bearbeitungsbereich wieder zur Fördereinrichtung transportiert.

Die DE 101 40 940 A1 beschreibt eine CNC-gesteuerte Werkzeugmaschine, insbesondere Drehmaschine mit senkrecht arbeitender Hauptspindel, bei der mittels einer Übergabevorrichtung Werkstücke von einer Fördereinrichtung zu einer anhebbaren Übergabevorrichtung befördert werden und von dort mittels einer linear verfahrbaren Hauptspindel in den Bearbeitungsbereich und wieder zurück zur Übergabevorrichtung und von dort auf die Fördereinrichtung transportiert werden.

Aus der US 6 634 265 B2 ist eine CNC-gesteuerte Werkzeugmaschine, insbesondere Drehmaschine mit horizontal arbeitender Hauptspindel bekannt, bei der eine linear verfahrbare Greifer-Werkzeugeinheit Werkstücke von einer Ablagefläche aufnimmt und diese in den Bearbeitungsbereich und von dort wieder zur Ablagefläche transportiert.

### Aufgabe

Der Erfindung liegt die Aufgabe zugrunde, eine Werkzeugmaschine der vorausgesetzten Gattung so auszugestalten, dass sie auch bei Kleinstserien noch effektiv einsetzbar ist.

### Lösung

Gelöst wird die Aufgabe durch eine CNC-gesteuerte Werkzeugmaschine gemäß **Patentanspruch 1**.

### Einige Vorteile

Die Erfindung ermöglicht es mit einfachem und kostengünstigem Aufwand Werkstücke, insbesondere sogenannte Futterteile, auch bei Kleinstserien, in den Bearbeitungsraum einer CNC-Werkzeugmaschine, vorzugsweise einer Drehmaschine, zu befördern. Hier wird die Funktionalität einer CNC-gesteuerten Maschiene einbezogen, um eine schneite, flexible und kostengünstige Lösung der Be- und Entladung zu ermöglichen. Dabei wird unter Einbeziehung von Standard-Komponenten wie Werkzeugrevolver und Teilefänger eine Minimierung der Umrüstzeiten und Werkstückwechselzeiten zur Automatisierung der Produktion ermöglicht, wodurch auch eine Be- und Entladung für Kleinstserien lukrativ wird. So ist es zum Beispiel bei Anwendung der erfindungsgemäßen Lehre möglich, mit wenigen Handgriffen innerhalb kürzester Zeit, zum Beispiel einer Minute, die Be- und Entladeeinrichtung auf neue Abmessungen von zu bearbeitenden Werkstücken, insbesondere von Futterteilen, umzurüsten.

Zur schnellen Entladung kann der normale Werkstückfänger zeitgleich zur Beladung eingesetzt werden. Sollten die Werkstücke wegen der Oberfläche schonend behandelt werden, so ist die Umkehr der Beladung zum Entnehmen von Werkstücken mit geringem Mehraufwand (Fertigteilaufnahme im Revolver) bei geringer Erhöhung der Wechselzeit möglich.

Damit ist die erfindungsgemäße Lösung flexibel auf Kundenanforderung anwendbar.

Des weiteren ist keine längere Justage bei Durchmesseränderungen gegeben. Bei der Zuführung ist eine geringe Einstellung notwendig, da hier nur ein prismatischer Anschlag, zum Beispiel mittels Flügelschrauben, verschoben und fixiert werden muss. Als Führungsbleche ausgebildete sogenannte Andrücker brauchen nicht bei Durchmesseränderung angepasst zu werden. Greiferfinger sind mittels Einstellschrauben schnell zu justieren. Durch den großen Hub des insbesondere als Pneumatik-Greifer ausgebildeten Greifers ist erst bei Änderung größer als 10 mm eine Nachjustage erforderlich.

Der Greifer im Revolver wird mittels Vierkantschlüssel an einem Handspannfutter voreingestellt und mittels Federkraft betätigt.

Die Erfindung zeichnet sich außerdem dadurch aus, dass der Werkstückgreifer an Schwenkarmen (Schwenkbewegungen) befestigt ist und mit einem Schlitten linear bewegt wird. Durch die mechanische Kopplung der Dreh- und Linearbewegung mit nur einem Motor kann der dynamische Ablauf ohne Stoppen von einer Drehbewegung in eine Linearbewegung und umgekehrt erfolgen. Dadurch wird der zeitliche Ablauf verkürzt und die Bauteilkosten erheblich reduziert.

Vorteilhafterweise ist die Schlitteneinheit universell einsetzbar. Die Übergabe der Werkstücke erfolgt horizontal in dem Bearbeitungsraum und ggf. aus diesem Bearbeitungsraum heraus. Die Rohteile werden vertikal aus einem Magazin geholt und horizontal dem Bearbeitungsraum der Werkzeugmaschine, insbesondere einer Drehmaschine, zugeführt.

Optional kann eine Palettenstation vorgesehen werden. Das Entladen von Fertigteilen erfolgt auf einen Linear- oder Stetigförderer, der als Bandförderer oder Palettenförderer ausgebildet sein kann.

Wird eine Anzahl von zum Beispiel an der Außenseite zylindrischen Werkstücken auf einer Zuführstrecke herangeführt, muss zum Abgreifen diese Serie von Rohteilen gestoppt, separiert und an einer Übergabeposition fixiert werden, wodurch eine Vereinzelung erfolgt. Die Erfindung zeichnet sich dadurch aus, dass dies nur mit einer durch eine Linearbewegung, zum Beispiel mittels eines durch Druckmitteldruck, vorzugsweise pneumatisch angetriebenen, Zylinders, erfolgt, der zum Beispiel abwechselnd beidseitig durch Druckmitteldruck, insbesondere pneumatisch, zu beaufschlagen ist. Hierbei ist die Anordnung der Vereinzelung so gewählt, dass bei Wechsel des Durchmessers keine Einstellung notwendig ist. Der Andrückhub zum Werkstückgreifer ist so gewählt, dass alle Werkstücklängen aus der Spezifikation der Beladeeinrichtung ohne eine Einstellung und Justage automatisch ablaufen. Dadurch ist eine schnelle Umrüstung auf neue Werkstückgrößen möglich und der Einsatz dieser Beladeeinrichtung auch bei kleinen Losgrößen wirtschaftlich.

### Weitere erfinderische Ausgestaltungen

Erfinderische Ausgestaltungen der Erfindung sind in den **Patentansprüchen 2** bis 19 beschrieben.

Weitere Merkmale ergeben sich aus der nachfolgenden Beschreibung der Zeichnungen, in der die Erfindung - teils schematisch - veranschaulicht ist. Es zeigen:

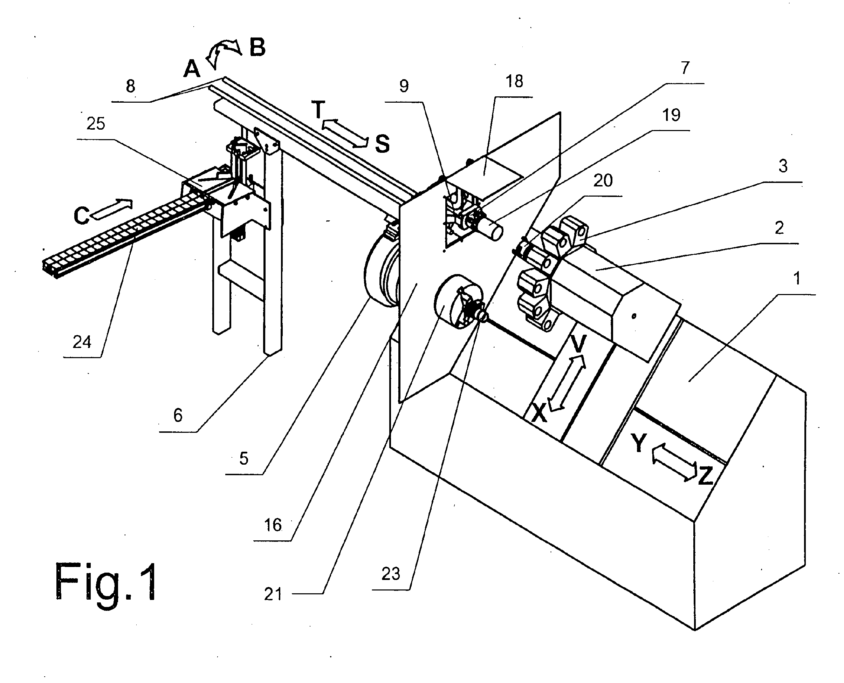

- Fig. 1: eine als CNC-gesteuerte Drehmaschine ausgebildete Werkzeugmaschine in perspektivischer Darstellung, wobei sich das Handlingsgerät (9) in Übergabeposition im Bearbeitungsraum befindet;

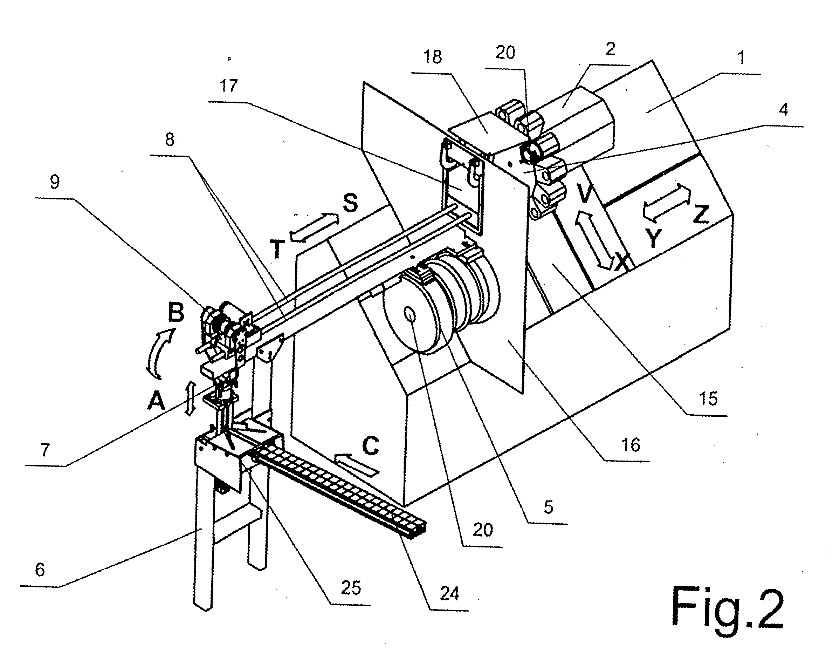

- Fig. 2: die aus Fig. 1 ersichtliche Drehmaschine in anderer perspektivischer Dar- stellung, wobei sich das Handlingsgerät (9) in Übernahmeposition am Ma- gazin befindet;

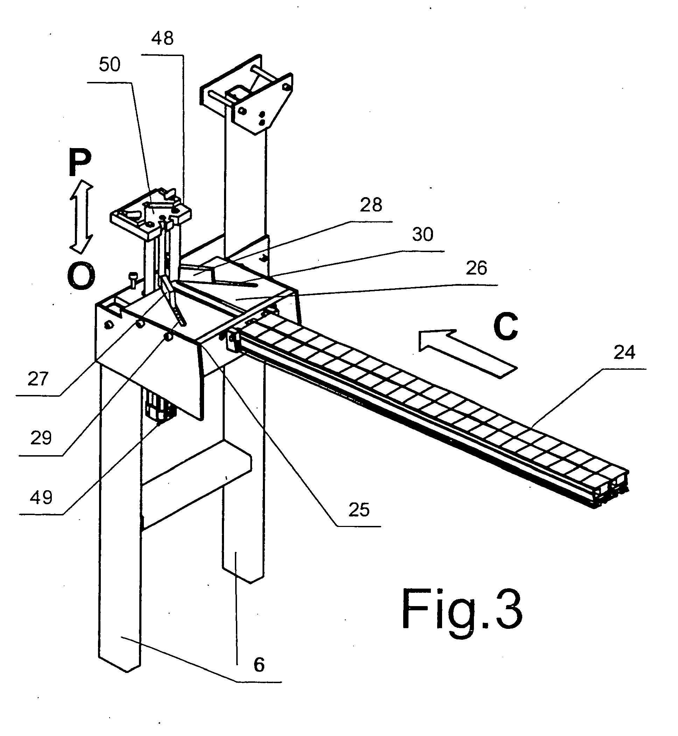

- Fig. 3: eine Einzelheit aus den Fig. 1 und 2 in größerem Maßstab, gleichfalls per- spektivisch dargestellt;

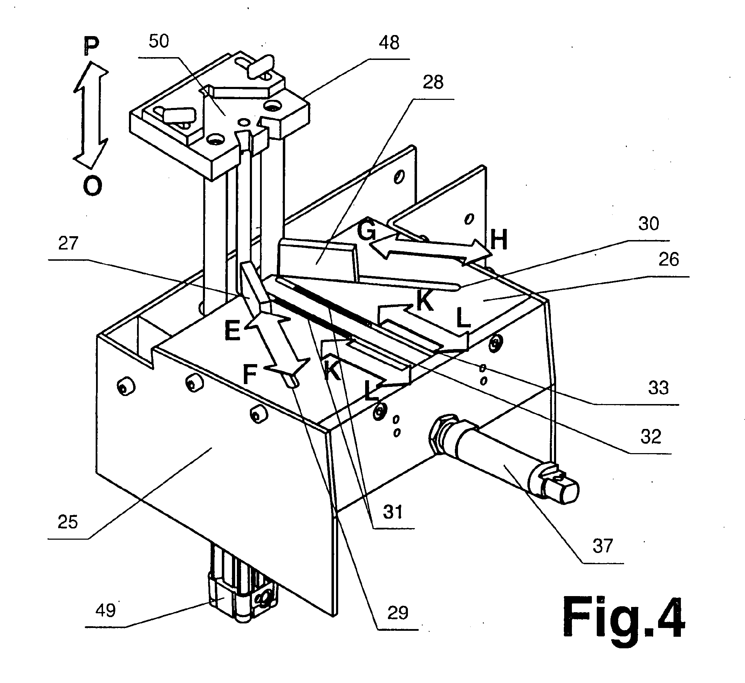

- Fig. 4: abermals eine Einzelheit im Bereich des Schiebetisches und des Prismas in größerem Maßstab, gleichfalls perspektivisch dargestellt;

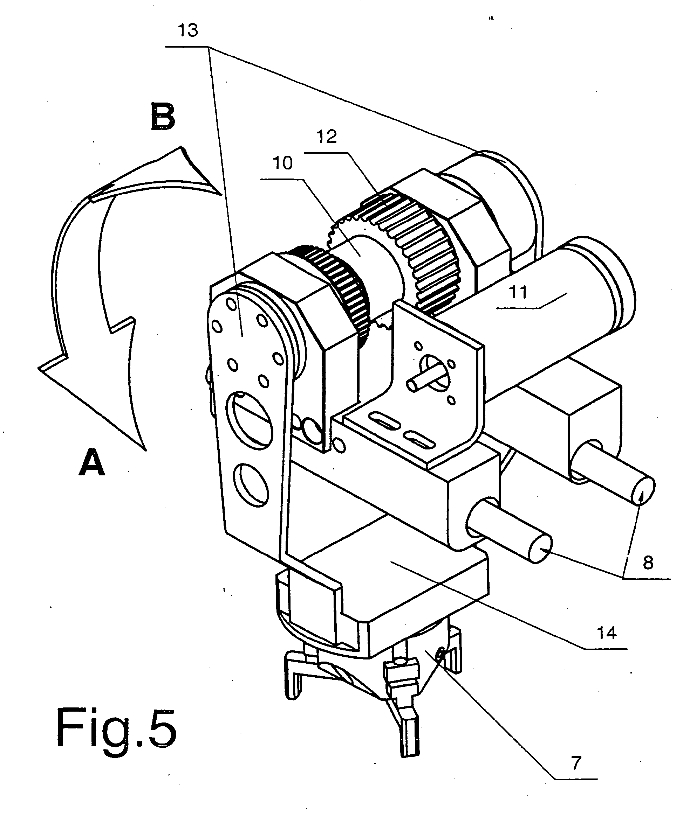

- Fig. 5: eine als Dreh- und Lineareinheit ausgebildete Schwenk- und Dreheinheit mit nach unten geschwenktem Greifer, in perspektivischer Darstellung;

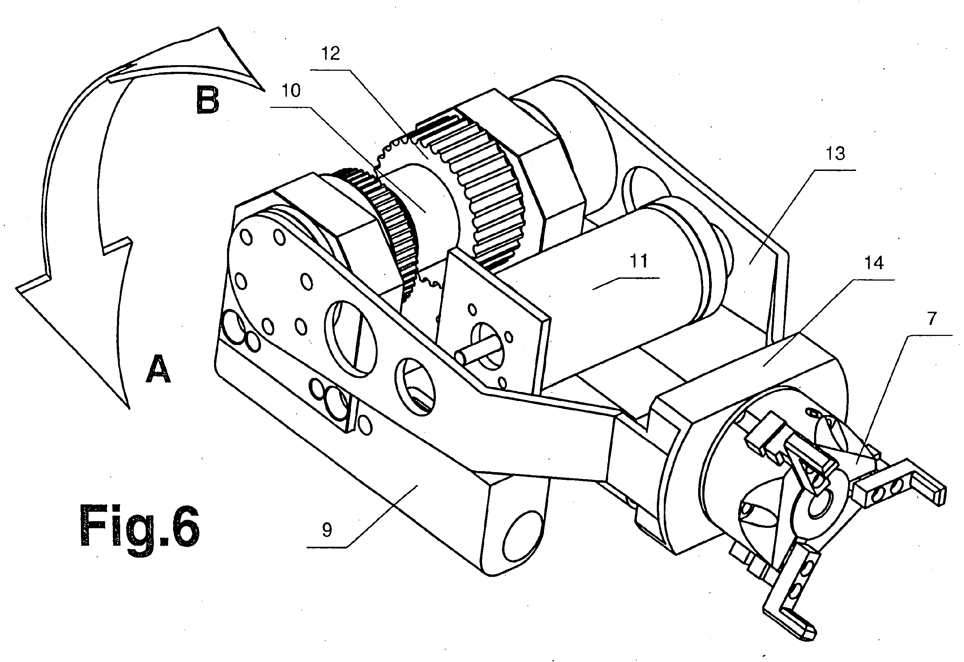

- Fig. 6: die aus Fig. 5 ersichtliche Dreh- und Lineareinheit bei in horizontaler Ebene geschwenktem Greifer, perspektivisch veranschaulicht;

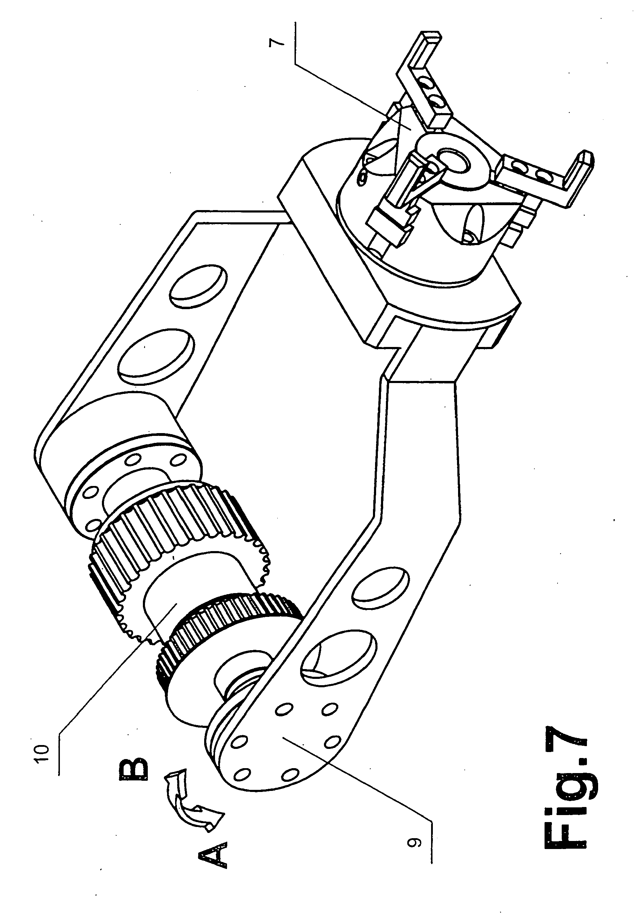

- Fig. 7: eine ausschnittsweise Darstellung der Dreh- und Schwenkeinheit gemäß Fig. 5 und 6, perspektivisch dargestellt, und
- Fig. 8: eine Einzelheit aus den Fig. 1 und 2 im Bereich des Transporteurs in schematischer Seitenansicht.

In der Zeichnung ist die Erfindung in Anwendung auf eine CNC-gesteuerte Drehmaschine veranschaulicht, die im wesentlichen aus einem Maschinenbett 1 und einer in Richtung Y bzw. Z und X bzw. V motorisch beweglichen Schlitteneinheit 2 CNC-gesteuerten und motorisch angetriebenen Revolver 3 mit Revolverscheibe 4 besteht.

Das Bezugszeichen 5 bezeichnet einen Spindelkasten, während 6 ein Gestell darstellt, oberhalb dessen ein als Pneumatikgreifer ausgebildeter Greifer 7 angeordnet ist. Der Greifer 7 ist an zwei mit ihren Längsachsen parallel zueinander und horizontal verlaufenden Führungsstangen 8 in entgegengesetzten Richtungen T bzw. S motorisch hubbeweglich angeordnet. Zu diesem Zweck ist dem Greifer 7 eine Dreh- und Lineareinheit 9 zugeordnet, die im wesentlichen ein Planetengetriebe 10, einen beispielsweise als Gleichstrommotor ausgebildeten Antriebsmotor 11, eine Zahnriemenscheibe 12, eine Dreheinheit 13, einen Querträger 14 zum Anordnen des Greifers 7, aufweist. Über den Antriebsmotor 11 und das Planetengetriebe 12 und einen nicht dargestellten Zahnriemen lässt sich die Dreh- und Lineareinheit 9 in Längsachsrichtung der Führungsstangen 8, also in Richtung T bzw. S einerseits motorisch antreiben, andererseits aber auch je nachdem welches Teil festgebremst wird, die Dreheinheit 13 in vertikaler Ebene, also in Richtung A bzw. B um mehr als 180° C, vorzugsweise um einen Winkel von 270°, schwenken. Zur Hubbewegung in T bzw. S kann zum Beispiel der über die Zahnriemenscheibe 12 geführte Zahnriemen (nicht dargestellt) festgebremst werden (feststehen), oder aber die Zahnriemenscheibe 12 wird festgebremst, wodurch eine Schwenkbewegung der Dreheinheit 13 mit Greifer 7 um die Längsachse des Planetengetriebes 10 bzw. der Zahnriemenscheibe 12 erfolgt. Auf diese Art und Weise lassen sich zu bearbeitende Werkstücke in der nachfolgend beschriebenen Art und Weise aufnehmen und transportieren bzw. im Bedarfsfalle auch bearbeitete Werkstücke wieder ablegen.

Die aus der Zeichnung ersichtliche Drehmaschine besitzt einen Arbeitsraum 15 der nach außen hin abgekapselt sein kann (nicht dargestellt). Aus der Zeichnung ist lediglich eine Trennwand 16 zu erkennen, die eine Öffnung 17 aufweist, die durch eine Klappe 18, die um eine horizontale Achse schwenkbeweglich ist, verschließbar ist. Die Führungsstangen 8 sind in der Öffnung 17 gelagert, derart, dass der Greifer 7 ergriffene Werkstücke 19 durch die Öffnung 17 in den Arbeitsraum 15 hineintransportieren und an einen zum Beispiel als Federgreifer ausgebildeten Greifer 20 übergeben kann, der das aufgenommene Werkstück 19 an das Futter 21 einer Hauptspindel durch entsprechende Drehbewegung und eine Verstellbewegung in Richtung Y übergibt. Das Fertigteil ist mit dem Bezugszeichen 23 bezeichnet. Mit 20 ist die Hauptspindel bezeichnet.

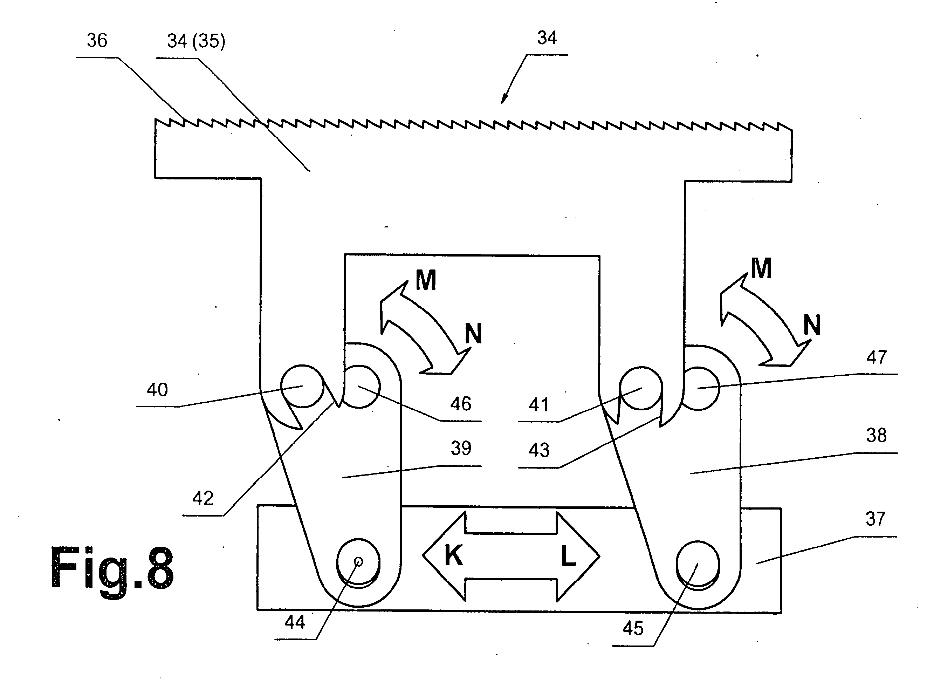

Mit dem Bezugszeichen 24 ist ein motorisch oder durch Schwerkraft (z. B. Rutsche) angetriebener, beispielsweise als Rollenförderer ausgebildete Linearförderer bezeichnet, durch den die zu bearbeitenden Werkstücke 19 (Rohteile) herangefördert werden. Durch den Linearförderer 24 werden einer nachfolgend noch beschriebenen Zuführvorrichtung 25 die Rohteile 19 in Richtung C zugefördert. Am Ende des Linearförderers 24 ist ein Schiebetisch 26 mit horizontaler Auflageplatte vorgesehen, der zwei bei der dargestellten Ausführungsform unter einem Winkel α von 60° mit der Längsachsen voneinander divergierende platten- oder blechförmige Andrücker 27, 28 aufweist, die jeweils in längere als diese Andrücker 27, 28 ausgebildete Längsschlitze 29, 30 des Schiebetisches 26 in Richtung E, F bzw. G, H motorisch stufenlos verschieblich angeordnet sind. Die Zuführvorrichtung 25 weist ein einstückiges kastenförmiges Gebilde auf, unter dessen Schiebetisch 26 ein Transporteur 31 in Richtung K bzw. L hub-/schwenkbeweglich angeordnet ist. Der Transporteur 31 besteht im wesentlichen aus in Längsschlitzen 32 bzw. 33 parallel und mit Abstand zueinander angeordneten laschenförmigen, an ihrer aus den Längsschlitzen 32 und 33 jeweils heraustretenden Oberflächenbereichen aufgerauhten oder mit einer Verzahnung oder Riffelung 36 versehenen Transportlaschen 34, 35. Die beiden Transportlaschen 34 und 35 und die Andrücker 27, 28 werden durch einen Hubmotor 37 in entgegensetzten Richtungen angetrieben. Dieser Hubmotor 37 kann durch Druckmitteldruck, insbesondere abwechselnd beidseitig durch eine durch Druckluft zu beaufschlagende Kolben-Zylinder-Einheit gebildet werden. Bei 38 und 39 sind zwei beabstandete, gleiche Hebel angeordnet, die paarweise für jede Transportlasche 34 und 35 vorgesehen sind. Die Hebelpaare 38 und 39 und die nicht ersichtlichen Hebelpaare der anderen Transportlasche 34 bzw. 35 sind jeweils über eine Kulisse, bestehend aus einem sich quer zur Hubrichtung K - L sich erstreckenden durchgehenden Bolzen 40 und 41 und durch in an den Enden der Transportlaschen 34 und 35 vorgesehenen Vorsprüngen angeordneten schlitzförmigen Langlöcher 42 bzw. 43, in denen die Bolzen 40 bzw. 41 wandern, wenn eine Hubverstellung in Richtung K bzw. L erfolgt, antreibbar. Dabei schwenken die Hebel 38 bzw. 39 einerseits um Achsen 44 bzw. 45, die dem Hubmotor 37 zugeordnet sind und um ortsfeste Achsen 46 bzw. 47, die dem Schiebetisch 36 zugeordnet sind, wodurch die Transportlaschen 34 und 35 eine Hub-Verschiebebewegung in Richtung M bzw. N (Fig. 8) ausführen und dadurch auf dem Schiebetisch 26 befindliche Rohteile 19 anheben und an einer weiteren Vorwärtsbewegung in Richtung C auf die Andrücker 27 bzw. 28 hindern oder sie zwischen diese divergierenden Andrücker 27 und 28 vorschieben. Die Achsen 44, 45 sind in Langlöchern gelagert. Dadurch kommt diesem Teil drei Funktionen zu, nämlich ein Transport der Rohteile 19, eine Vereinzelungswirkung und eine Positionierung in Bezug auf die Andrücker 27 und 28 und einem prismaartigen Teil 48, das in Richtung O bzw. P durch einen abwechselnd beidseitig durch Druckmitteldruck, insbesondere durch Luftdruck, zu beaufschlagenden Hubmotor 49 beweglich ist. Das prismaartige Teil 48 besitzt entsprechend dem Winkel, den die Andrücker 27 und 28 mit ihren einander zugekehrten Seitenwannen bilden eine entsprechende Aussparung 50, in die beim Absenken des Prismas 48 die zu bearbeitenden Werkstücke 19 eingeschoben und dann von dem Schiebetisch 26 abgehoben werden, worauf sie von dem nach unten in Richtung A geschwenkten Greifer 7 ergriffen und dann um 270° nach oben geschwenkt und anschließend in Richtung S zum Bearbeitungsraum 15 der Drehmaschine transportiert werden, wo sie an den Federgreifer 20 übergeben werden, der sie wiederum an das Futter 21 der Hauptspindel zur Bearbeitung abgibt. Die Bewegungen der Andrücker 27 und 28 sind somit so, dass diese die Rohteile tangential gegen das prismaartige 48 andrücken, während die Längs-/Hubbewegung der Transportlaschen 34, 35 des Transporteurs 31 ähnlich wie einer Nähmaschine erfolgt. Der Hebe-Hub (Kippen) über den Hebelmechanismus 38, 39, 40, 41 (Fig. 8) des Transporteurs 31 erfolgt dabei so, dass bei einer Vorwärtsbewegung die Transportlaschen 34, 35 angehoben und beim Rückwärtshub gesenkt werden. Sämtliche Antriebe sowie sämtliche Hub- und Schwenkbewegungen können in eine Folgesteuerung sowie weitgehend in die CNC-Steuerung der Drehmaschine, einbezogen sein.

Es erfolgt eine horizontale Zuführung der Rohteile 19 in den Bearbeitungsraum 15 der Drehmaschine. Nach der Fertigbearbeitung wird das Futter 21 gelöst, so dass die Fertigteile 23 über eine Rutsche oder dergleichen in einen bereitgestellten Behälter hineinfallen oder hineinrutschen oder in sonstiger Weise wegtransportiert werden können (nicht dargestellt). Es ist aber auch bei oberflächensensitiven Teilen möglich, den Greifer 20 des Revolvers 3 auch zum Abtransportieren der fertig bearbeiteten Werkstücke 23 heranzuziehen, diese also wiederum an den Greifer 7 abzugeben, der dann die fertig bearbeiteten Werkstücke 23 in Richtung T abtransportiert und in geeigneter Weise dem gleichen 24 oder einem anderen Förderer zufördert. Dies kann durch eine Linear- oder Schwenkbewegung geschehen. Es ist möglich, die Dreh- und Lineareinheit 9 in vertikaler Stellung (Greifer 7 nach unten gerichtet) linear in Richtung S zu verfahren, um dort einem neben der Zuführung 24 angeordneten Förderer das Fertigteil zu übergeben. Es ist auch möglich, dem Greifer 7 eine weitere Achse, zum Beispiel eine Querachse, hinzuzuordnen, damit die Fertigteile 23 auf einen Parallelförderer oder in sonstiger Weise unter einem Winkel zu dem Linearförderer 24 angeordneten Abförderer hingefördert werden können. Das Heranfördern von Rohteilen 19 einerseits und Abfördern von Fertigteilen 23 andererseits geschieht dann vollautomatisch.

### Bezugszeichen

- 1: Maschinenbett
- 2: Schlitteneinheit
- 3: Revolver, erstes Handlingsgerät
- 4: Revolverscheibe
- 5: Spindelkasten
- 6: Gestell
- 7: Pneumatikgreifer, Greifer
- 8: Führungsstangen
- 9: Dreh- und Lineareinheit, zweites Handlingsgerät
- 10: Planetengetriebe
- 11: Gleichstrommotor, Antriebsmotor
- 12: Zahnriemenscheibe
- 13: Dreheinheit
- 14: Querträger
- 15: Arbeitsraum
- 16: Trennwand
- 17: Öffnung
- 18: Klappe
- 19: Werkstück, Rohteil
- 20: Federgreifer, Greifer
- 21: Futter
- 22: Hauptspindel
- 23: Fertigteil
- 24: Linearförderer
- 25: Zuführvorrichtung
- 26: Schiebetisch
- 27: Andrücker
- 28: "
- 29: Längsschlitz
- 30: "
- 31: Transporteur
- 32: Längsschlitz
- 33: "
- 34: Transportlasche
- 35: "
- 36: Oberfläche der Transportlaschen 34, 35
- 37: Hubmotor
- 38: Hebel
- 39: "
- 40: Bolzen
- 41: "
- 42: Langloch
- 43: "
- 44: Achse
- 45: "
- 46: "
- 47: "
- 48: Prisma, prismatisches Teil
- 49: Hubmotor
- 50: Aussparung

- A: Schwenkbewegung der Dreheinheit 13
- B: " "
- C: Zuführrichtung der Rohteile
- E: Hub des Andrückers 27
- F: " " "
- G: Hub des Andrückers 28
- H: " " "
- K: Hub-/Schwenkbewegung des Transporteurs 31
- L: " " "
- M: Hub-Verschiebebewegung der Transportlaschen
- N: " " "
- O: Hub des Prismas 48
- P: " " "
- S: Hub des Greifers 7
- T: " " "
- V: Hub der Schlitteneinheit 2
- X: " " "
- Y: " " "
- Z: " " "
- α: Winkel zwischen Wänden der Andrücker 27, 28

**Literäturverzeichnis**
DE 33 29 266 A1
DE 101 40 940 A1
US 6 634 265 B2

## Patentansprüche

1. CNC-gesteuerte Werkzeugmaschine, insbesondere CNC-gesteuerte Drehmaschine, mit einer horizontal angeordneten Hauptspindel (22) mit Futter (21), zur Aufnahme von zu bearbeitenden Werkstücken (19), einem im Abstand dazu angeordneten, in die CNC-Steuerung einbezogenen ersten Handlingsgerät (3) zum Aufnehmen und Übergeben von Rohteilen (19) an das Futter (21) der Hauptspindel (22) und zum Abnehmen fertig bearbeiteter Werkstücke (23), einem parallel zur Hauptspindel (22) und außerhalb des Arbeitsraumes (15) horizontal angeordneten, motorisch angetriebenen Linearförderer, an dem ein motorisch angetriebenes zweites Handlingsgerät (9) mit Greifer (7) hin und her (T - S) längsverschieblich geführt angeordnet ist, der die Werkstücke (19) nacheinander von einem Magazin, zum Beispiel von einem weiteren Linearförderer (24) übernimmt und in den Arbeitsraum (15) zu dem ersten Handlingsgerät (3) hinfördert und an dieses übergibt und/oder von dem ersten Handlingsgerät (3) aus dem Arbeitsraum (15) fertig bearbeitete Werkstücke (23) wieder aus dem Arbeitsraum (15) wegfördert,
**dadurch gekennzeichnet,**
**dass** dem Magazin oder dergleichen (24) zum Transport und zur Vereinzelung der herangeführten Rohteile (19) und zur Ausrichtung derselben in Bezug auf die Übergabeposition an den Greifer (7) des zweiten Handlingsgeräts (9) in Richtung auf die ankommenden Rohteile (19) voneinander divergierende und in ihrer Längsachsrichtung jeweils um ein begrenztes Maß längsverschiebliche (E, F, G, H) Andrücker (27, 28) zugeordnet sind, mit denen das betreffende Rohteil (19) bis in die Übergabeposition andrückbar ist, wobei die folgenden Rohteile (19) weiter transportierbar sind.

2. Werkzeugmaschine nach Anspruch 1, **dadurch gekennzeichnet, dass** die Längsachsen der Andrücker (27, 28) einen Winkel (α) von weniger als 90°, vorzugsweise < 60°, miteinander bilden.

3. Werkzeugmaschine nach Anspruch 1 oder 2, **dadurch gekennzeichnet, dass** die Andrücker (27, 28) in Längsschlitzen (29, 30) eines Schiebetisches (26) in ihrer Längsachsrichtung motorisch hubbeweglich (E, F, G, H) geführt und in der jeweiligen Stellung arretierbar sind.

4. Werkzeugmaschine nach einem der Ansprüche 1 bis 3, **dadurch gekennzeichnet, dass** die einander zugekehrten Seitenwände der Andrücker (27, 28) das jeweilige Rohteil (19) tangential nach Art von Kreistangenten berühren, derart, dass die Gerade, die auf einer Kreistangente im Berührungspunkt lotrecht steht, durch den Kreismittelpunkt des runden Rohteils (19) verläuft, so dass bei Durchmesserveränderung der Werkstücke (19) keine Justage der Vereinzelung notwendig ist.

5. Werkzeugmaschine nach einem der Ansprüche 1 bis 4, **dadurch gekennzeichnet, dass** die Andrücker (27, 28) einem als Übergabetisch ausgebildeten Schiebetisch (26) zugeordnet sind, der an seiner Rückseite einen in vertikaler Richtung (P - O) in entgegengesetzten Richtungen angetriebenen Heber aufweist, der eine Art Prisma (48) besitzt, mit dem die zwischen den Andrückern (27, 28) zentrierten Rohteile (19) erfasst und vertikal zu dem Greifer (7) des zweiten Handlingsgerätes (9) in eine Übergabeposition emporhebt.

6. Werkzeugmaschine nach einem der Ansprüche 1 bis 5, **dadurch gekennzeichnet, dass** außerhalb des Arbeitsraumes (15) mindestens eine mit ihrer Längsachse parallel zur Hauptspindel (22) verlaufende horizontale starre Führung (8) angeordnet ist, an welcher das zweite Handlingsgerät (9) außerhalb des Arbeitsraumes (15) mit seinem Greifer (7) in mindestens einer Ebene (T - S) in entgegengesetzten Richtungen motorisch längsverschieblich und/oder drehbar und/oder schwenkbar (A - B) angeordnet ist, und dass der motorische Antrieb des zweiten Handlingsgerätes (9) positionsgesteuert ist.

7. Werkzeugmaschine nach einem der Ansprüche 1 bis 6, **dadurch gekennzeichnet, dass** der Arbeitsraum (15) auf einer Seite durch eine zu öffnende Trennwand (16) verschlossen ist, durch die der Greifer (7) des außerhalb des Arbeitsraumes (15) zwangsgeführten zweiten Handlingsgerätes (9) zum Zweck der Übergabe an das im Arbeitsraum (15) angeordnete erste Handlingsgerät (3) hindurchbewegbar ist.

8. Werkzeugmaschine nach einem der Ansprüche 1 bis 7, **dadurch gekennzeichnet, dass** das im Arbeitsraum (15) angeordnete erste Handlingsgerät (3) ein Mehrfachrevolver ist, der um eine parallel zur Drehachse der Hauptspindel (22) angeordnete Achse motorisch antreibbar ist, wobei der motorische Antrieb in die CNC-Steuerung einbezogen ist.

9. Werkzeugmaschine nach einem der Ansprüche 1 bis 8, **dadurch gekennzeichnet, dass** das als Dreh- und Lineareinheit ausgebildete zweite Handlingsgerät (9) des Linearförderers durch ein und denselben Motor (11) in entgegengesetzten Richtungen (T - S) antreibbar und um mehr als 180°, vorzugsweise um 270°, auch schwenkbar (A - B) ist.

10. Werkzeugmaschine nach Anspruch 5, **dadurch gekennzeichnet, dass** das Prisma (48) mittels Flügelschrauben verschiebbar und fixierbar ist.

11. Werkzeugmaschine nach Anspruch 5, **dadurch gekennzeichnet, dass** die Hubbewegung der Andrücker (27, 28) gleichzeitig ein Anheben von Transportlaschen (34, 35) bewirkt und die folgenden Werkstücke (19) um den Längshub weitertransportiert.

12. Werkzeugmaschine nach Anspruch 5, **dadurch gekennzeichnet, dass** die Hubbewegungen der Andrücker (27, 28) und des Prismas (48) sowie der Greifer (7) über Endlagenschalter oder dergleichen überwachbar sind, so dass ein Fehlen von Werkstücken (19) im entsprechenden Ablauf feststellbar ist und zur Alarmmeldung führt (Prozesssicherheit).

13. Werkzeugmaschine nach Anspruch 11, **dadurch gekennzeichnet, dass** den Transportlaschen (34, 35) an ihren den Rohteilen (19) zugekehrten Oberseiten eine den Kraftschluss erhöhende Aufrauhung, Rifflung oder Verzahnung zugeordnet ist.

14. Werkzeugmaschine nach Anspruch 11 oder 13, **dadurch gekennzeichnet, dass** die Transportlaschen (34, 35) über eine Kulissenführung und über ein Parallellogrammhebelantrieb mit einem unterhalb des Schiebetisches (26) angeordneten Hubmotors (37) hub-/schwenkbeweglich (N - M) angetrieben sind.

15. Werkzeugmaschine nach Anspruch 14, **dadurch gekennzeichnet, dass** die Transportlaschen (34, 35) jeweils zwei beabstandete Vorsprünge mit an ihren Enden angeordneten Längsschlitzen aufweisen, in die Bolzen (40, 41) eingreifen, die über beabstandete Hebel (38, 39) des Parallellogrammgetriebes bei der Hubbewegung (K - L) des Hubmotors (37) angetrieben sind.

16. Werkzeugmaschine nach Anspruch 14 oder 15, **dadurch gekennzeichnet, dass** die Bewegung der Andrücker (27, 28) einerseits und die der Transportlaschen (34, 35) andererseits aufeinander abgestimmt sind und dass die Andrücker (27, 28) und die Transportlaschen (34, 35) durch ein und denselben Hubmotor (37) antreibbar sind.

17. Werkzeugmaschine nach einem der Ansprüche 5, 10 bis 16, **dadurch gekennzeichnet, dass** der die Rohteile (19) heranfördernde Linearförderer (24) die Rohteile (19) auf den Schiebetisch (26) fördert, der unterhalb der Schwenkebene einer Dreheinheit (13) des zweiten Handlingsgerätes (9) angeordnet ist.

18. Werkzeugmaschine nach einem der Ansprüche 14 bis 16, **dadurch gekennzeichnet, dass** der Schiebetisch (26) die Oberfläche eines kastenförmigen Teils der Zuführvorrichtung (25) darstellt, der einerseits den Hubmotor (37) zum Antrieb der Transportlaschen (34 und 35), aber auch zum Antrieb der Andrücker (27, 28) aufnimmt und der Längsschlitze (29, 30) zum Führen der Andrücker (27, 28) aufweist.

19. Werkzeugmaschine nach einem der Ansprüche 5, 10 bis 18, **dadurch gekennzeichnet dass** an der dem Linearförderer (24) zum Heranfördem der Rohteile (19) abgekehrten Seite des Schiebetisches (26) das hubbewegliche prismatische Teil (48) mit Hubmotor (49) angeordnet ist.

## Claims

1. A CNC-controlled machine tool, in particular a CNC-controlled turning machine, comprising:
a horizontally disposed main spindle (22) with chuck (21), for receiving workpieces (19) to be processed;
a first handling device (3) disposed at a distance therefrom and integrated in the CNC control for picking up and delivering unprocessed workpieces (19) to the chuck (21) of the main spindle (22) and for removing processed workpieces (23);
a linear conveyor driven by a motor and horizontally disposed parallel to the main spindle (22) and outside of the working space (15);
a motor-driven second handling device (9) which is disposed at the linear conveyor and is longitudinally reciprocatable (T-S) with a gripper (7) which takes over the workpieces (19) sequentially from a magazine, e.g. from a further linear conveyor (24) and conveys them into the working space (15) towards the first handling device (3) and delivers them to same and/or conveys processed workpieces (23) from the first handling device (3) from the working space (15) out of the working space (15) again,
**characterized in that**
assigned to the magazine or alike (24) for transporting and for isolating the approaching unprocessed workpieces (19) and for aligning same relative to the delivery position to the gripper (7) of the second handling device (9) in the direction of the approaching unprocessed workpieces (19) are diverging and by a limited distance longitudinally reciprocatable (E, F, G, H) pressure plates (27, 28), by means of which the unprocessed workpiece (19) concerned is pressed into the delivery position, wherein the following unprocessed workpieces (19) are further transportable.

2. The machine tool according to claim 1,
**characterized in that**
the longitudinal axes of the pressure plates (27, 28) form an angle (α) of less than 90°, preferably < 60°.

3. The machine tool according to claim 1 or 2,
**characterized in that**
the pressure plates (27, 28) are guided in longitudinal slots (29, 30) of a slide table (26) by a motor in a liftable manner (E, F, G, H) in their longitudinal direction and are lockable in place.

4. The machine tool according to one of claims 1 to 3,
**characterized in that**
the side walls of the pressure plates (27, 28) facing each other tangentially contact the unprocessed workpiece (19) concerned in the mode of circle tangents in such a way that the orthogonal straight line to a circle tangent at the contact point passes through a center point of the circular unprocessed workpiece (19), so that upon diameter variation of the workpieces (19) no adjustment of the isolating is required.

5. The machine tool according to one of claims 1 to 4,
**characterized in that**
the pressure plates (27, 28) are assigned to a slide table (26) designed as a delivery table having on its reverse side a lifting means driven in vertical direction (P - O) in opposite directions having a kind of prism member (48) by means of which the unprocessed workpieces (19) centered between the pressure plates (27, 28) are gripped and lifted vertically to the gripper (7) of the second handling device (9) into a delivery position.

6. The machine tool according to one of claims 1 to 5,
**characterized in that**
outside the working space (15) at least one horizontal rigid guide (8) extending with its longitudinal axis parallel to the main spindle (22) at which the second handling device (9) outside the working space (15) is disposed with its grippers (7) in at least one plane (T - S) longitudinally reciprocatable by a motor in opposite directions and/or rotatable and/or swingable (A - B), and that the motor drive of the second handling device (9) is controlled in position.

7. A machine tool according to one of claims 1 to 6,
**characterized in that**
the working space (15) on one side is closed by a partition (16) that can be opened and through which the gripper (7) of the second handling device (9) which is force-guided outside the working space (15) can be moved for the purpose of delivery to the first handling device (3) disposed within the working space (15).

8. The machine tool according to one of claims 1 to 7,
**characterized in that**
the first handling device (3) disposed in the working space (15) is of a multi-turret configuration that is drivable by a motor about an axis disposed parallel to the rotary axis of the main spindle (22), wherein said motor drive is integrated into the CNC control.

9. The machine tool according to one of claims 1 to 8,
**characterized in that**
the second handling device (9) of the linear conveyor designed as rotary and linear unit is drivable by one and the same motor (11) in opposite directions (T - S) and preferably is also swingable (A - B) by more than 180°, preferably by 270°.

10. The machine tool according to claim 5,
**characterized in that**
the prism (48) is shiftable and fixable by means of wing screws.

11. The machine tool according to claim 5,
**characterized in that**
the lifting movement of the pressure plates (27, 28) at the same time effectuates a lifting of transport tongues (34, 35) and transports the following workpieces (19) by the longitudinal stroke.

12. The machine tool according to claim 5,
**characterized in that**
the lifting movements of the pressure plates (27, 28) and the prism member (48) as well as the grippers (7) are controllable via final layer switches or the like, so that a missing of workpieces (19) can be determined in the corresponding procedure and leads to an alarm signal (process reliability).

13. The machine tool according to claim 11,
**characterized in that**
the transport tongues (34, 35) at their top surfaces facing the unprocessed workpieces (19) are roughened, corrugated, or cogged to enhance transmission of power.

14. The machine tool according to claim 11 or 13,
**characterized in that**
the transport tongues (34, 35) via a coulisse guide and via a parallelogram lever drive with a lifting motor (37) disposed below the slide table (26) are thereby driven in a liftable/swingable manner (N - M).

15. The machine tool according to claim 14,
**characterized in that**
the transport tongues (34, 35) each have two spaced-apart protrusions having longitudinal slots disposed at their ends which are engaged by the bolts (40, 41) driven via spaced-apart levers (38, 39) of the parallelogram drive upon lifting movement (K -L) of the lifting motor (37).

16. The machine tool according to claim 14 or 15,
**characterized in that**
the movement of the pressure plates (27, 28), on the one hand, and the movement of the transport tongues (34, 35), on the other hand, are synchronized with each other and that the pressure plates (27, 28) and the transport tongues (34, 35) are drivable by one and the same lifting motor (37).

17. The machine tool according to one of claims 5, 10 to 16,
**characterized in that**
the linear conveyor (24) transporting the unprocessed workpieces (19) transports the unprocessed workpieces (19) onto the slide table (26) disposed below the pivoting plane of a rotary unit (13) of the second handling device (9).

18. The machine tool according to one of claims 14 to 16,
**characterized in that**
the slide table (26) represents the top surface of a box-shaped part of the supply device (25) that, on the one hand, receives the lifting motor (37) for driving the transport tongues (34 and 35) but also for driving the pressure plates (27, 28) and has longitudinal slots (29, 30) for guiding the pressure plates (27, 28).

19. The machine tool according to one of claims 5, 10 to 18,
**characterized in that**
the liftable prism member (48) with the lifting motor (49) is disposed at the side of the slide table (26) that faces away from the linear conveyor (24) for delivering the unprocessed workpieces (19).

## Revendications

1. Machine-outil à commande numérique CNC, et notamment tour à commande numérique avec une broche principale horizontale (22) avec mandrin (21) pour la réception de pièces à usiner (19), avec un premier appareil de manipulation (3) intégré dans la commande numérique et agencé à une certaine distance pour la réception et le transfert de pièces brutes (19) au mandrin (21) de la broche principale (22) et pour l'enlèvement de pièces usinées (23), avec un convoyeur linéaire à moteur en position horizontale à l'extérieur de la chambre de travail (15) sur lequel un deuxième appareil de manipulation (9) à moteur et à grappin (7) est fixé sur un rail de glissement longitudinal à droite et à gauche (T - S) pour reprendre les pièces à usiner (19) l'une après l'autre d'un magazine comme par exemple un autre convoyeur linéaire (24) et pour les transporter dans la chambre de travail (15) pour les remettre au premier appareil de manipulation (3) et/ou pour enlever les pièces usinés (23) au premier appareil de manipulation (3) pour les sortir de la chambre de travail (15),
**caractérisée en ce que**
des poussoirs (27, 28) divergeant l'un par rapport à l'autre dans le sens des pièces brutes (19) arrivantes et pouvant être faits glisser dans le sens longitudinal sur une distance limitée (E, F, G, H) et permettant de comprimer la pièce bruite respective (19) jusqu'à la position de transfert - le transport des pièces brutes suivantes (19) pouvant continuer - sont associés au magazine etc. (24) pour le transport et l'individualisation des pièces brutes (19) amenées et pour l'orientation de celles-ci par rapport à la position de transfert au grappin (7) du deuxième appareil de manipulation (9).

2. Machine-outil selon la revendication 1, **caractérisée en ce que** les axes longitudinaux des poussoirs (27, 28) forment un angle (α) inférieur à 90° et de préférence inférieur à 60°.

3. Machine-outil selon la revendication 1 ou 2, **caractérisée en ce que** les poussoirs (27, 28) sont guidés dans les fentes longitudinales (29, 30) d'une table coulissante (26) où ils peuvent être déplacés par moteur dans le sens de leur axe longitudinal (E, F, G, H) et où ils peuvent être arrêtés dans la position respective.

4. Machine-outil selon l'une des revendications 1 à 3, **caractérisée en ce que** les parois latérales des poussoirs (27, 28) qui s'opposent, touchent la pièce brute (19) respective tangentiellement à l'instar de tangentes de cercle de sorte que la droite verticale dans le point de contact sur une tangente de cercle, passe à travers le centre du cercle de la pièce brute (19) ronde de sorte que le changement du diamètre des pièces à usiner (19) ne rend pas nécessaire un ajustement de l'individualisation.

5. Machine-outil selon l'une des revendications 1 à 4, **caractérisée en ce que** les poussoirs (27, 28) sont associés à une table coulissante (26) réalisée sous forme de table de transfert dont la face arrière est équipée d'un dispositif de levage entraîné dans le sens vertical (P - O) dans des sens opposés qui possède une sorte de prisme (48) à l'aide duquel les pièces brutes (19) centrées entre les poussoirs (27, 28) sont saisies pour être soulevées verticalement jusqu'à une position de transfert au niveau du grappin (7) du deuxième appareil de manipulation (9).

6. Machine-outil selon l'une des revendications 1 à 5, **caractérisée en ce que**, à l'extérieur de la chambre de travail (15), est prévu au moins un guidage (8) horizontal, immobile dont l'axe longitudinal est parallèle à la broche principale (22) et sur lequel est fixé le deuxième appareil de manipulation (9) avec son grappin (7) à l'extérieur de la chambre de travail (15) qui peut être fait glisser par moteur dans le sens longitudinal dans des sens opposés dans au moins un plan (T - S) et/ou qui peut être fait tourner et/ou pivoter (A - B) et **caractérisée en ce que** le moteur du deuxième appareil de manipulation (9) est asservi en position.

7. Machine-outil selon l'une des revendications 1 à 6, **caractérisée en ce que** la chambre de travail (15) est fermée d'un côté par une cloison (16) ouvrable par laquelle peut passer le grappin (7) du deuxième appareil de manipulation (9) qui est guidé à l'extérieur de la chambre de travail (15), pour assurer le transfert au premier appareil de manipulation (3) qui se situe à l'intérieur de la chambre de travail (15).

8. Machine-outil selon l'une des revendications 1 à 7, **caractérisée en ce que** l'appareil de manipulation (3) à l'intérieur de la chambre de travail (15) est du type revolver multiple pouvant être entraîné par moteur autour d'un axe parallèle à l'axe de rotation de la broche principale (22), l'entraînement motorisé étant intégré dans la commande numérique.

9. Machine-outil selon l'une des revendications 1 à 8, **caractérisée en ce que** le deuxième appareil de manipulation (9) du convoyeur linéaire qui est réalisé sous forme d'unité rotative et linéaire peut être entraîné par un seul et même moteur (11) dans des sens opposés (T - S) et peut être fait pivoter de plus de 180° et de préférence de 270° (A - B).

10. Machine-outil selon la revendication 5, **caractérisée en ce que** le prisme (48) peut être fait glisser et arrêté à l'aide de vis papillon.

11. Machine-outil selon la revendication 5, **caractérisée en ce que** le mouvement de levage des poussoirs (17, 28) cause en même temps le soulèvement de languettes de transport (34, 35) et fait avancer les pièces à usiner (19) suivantes de la course longitudinale correspondante.

12. Machine-outil selon la revendication 5, **caractérisée en ce que** les mouvements de levage des poussoirs (27, 28) et du prisme (48), ainsi que le grappin (7) peuvent être surveillés par des interrupteurs de fin de course ou par des dispositifs similaires de sorte que l'absence de pièces à usiner (19) dans le cycle correspondant est détectée et déclenche une alarme (sécurité du processus).

13. Machine-outil selon la revendication 11, **caractérisée en ce que** les faces supérieures des languettes de transport (34, 35) qui sont orientées vers les pièces brutes (19), sont munies d'une surface rugueuse, rainurée ou dentée pour optimiser la préhension.

14. Machine-outil selon l'une des revendications 11 ou 13, **caractérisée en ce que** les languettes de transport (34, 35) sont entraînées par un moteur de levage (37) situé sous la table coulissante (26) via un guidage à coulisse et via un entraînement de levage à parallélogramme de sorte à pouvoir être levées et faites pivoter (N - M).

15. Machine-outil selon la revendication 14, **caractérisée en ce que** les languettes de transport (34, 35) sont munies chacune de deux saillies d'une certaine distance avec des fentes longitudinales sur leurs extrémités où entrent les boulons (40, 41) qui sont entraînés via des leviers d'une certaine distance (38, 39) de l'entraînement à parallélogramme lors du mouvement de levage (K - L) du moteur de levage (37).

16. Machine-outil selon l'une des revendications 14 ou 15, **caractérisée en ce que** le mouvement des poussoirs (27, 28) d'un côté et le mouvement des languettes de transport (34, 35) de l'autre côté sont adaptés l'un par rapport à l'autre et que les poussoirs (27, 28) et les languettes de transport (34, 35) peuvent être entraînés par le seul et même moteur de levage (37).

17. Machine-outil selon l'une des revendications 5 ou 10 à 16, **caractérisée en ce que** le convoyeur linéaire (24) amenant les pièces brutes (19) transporte les pièces brutes (19) à la table coulissante (26) qui se situe sous le plan de pivotement d'une unité rotative (13) du deuxième appareil de manipulation (9).

18. Machine-outil selon l'une des revendications 14 à 16, **caractérisée en ce que** la table coulissante (26) forme la surface d'une partie en caisson du dispositif d'alimentation (25) qui loge le moteur de levage (37) assurant tant l'entraînement des languettes de transport (34, 35) que l'entraînement des poussoirs (27, 28) et qui est munie de fentes longitudinales (29, 30) pour guider les poussoirs (27, 28).

19. Machine-outil selon l'une des revendications 5 ou 10 à 18, **caractérisée en ce que** la partie prismatique (48) pouvant être soulevée par le moteur de levage (49) est positionnée sur la face de la table coulissante (26) qui est détournée du convoyeur linéaire (24) qui assure l'alimentation en pièces brutes (19).
